# EUROPEAN PATENT SPECIFICATION

(11) **EP 3 505 422 B1**
(45) Date of publication and mention of the grant of the patent: **29.12.2021**
(21) Application number: 18215915.2
(22) Date of filing: 30.12.2018
(51) Int. Cl.: B62D 13/04

(54) **SYSTEM FOR STEERING STEERABLE WHEELS OF A TRAILER**
SYSTEM ZUR REGELUNG DER STEUERBAREN RÄDER EINES ANHÄNGERS
SYSTÈME POUR LE RÉGLAGE DES ROUES DIRIGEABLES D'UNE REMORQUE

(30) Priority: 30.12.2017 NL 2020221
(43) Date of publication of application: 03.07.2019
(73) Proprietor: Koninklijke Nooteboom Group B.V., 6603 BV Wijchen (NL)
(72) Inventor: VELZEBOER, Thomas, 5761 GT BAKEL (NL)
(74) Representative: Bartelds, Erik

(56) References cited:
- NL-C2- 1 029 912

## Description

The invention relates to a system for steering steerable wheels of a trailer as defined in the preamble of claim 1, and to a hydraulic control circuit for use in such a system as defined in the preamble of claim 15. Such a steering system and hydraulic control circuit are both known from the present applicant's earlier patent NL 1029912 C2. The invention also relates to a trailer having such a steering system.

The steering system as disclosed in NL 1029912 C2, which is applied particularly in semi-trailers and trailers, comprises two hydraulic cylinder/piston combinations on the front side of the semi-trailer or trailer. In the case of a semi-trailer these cylinder/piston combinations can be connected to a fifth-wheel coupling of a tractive vehicle such that a movement of the fifth-wheel coupling, when the tractive vehicle changes direction, results in retracting or extending of the pistons. In a trailer the cylinder/piston combinations can be connected to a rotatable axle assembly on the front side which is connected to the tractive vehicle via a pole. The cylinder/piston combinations can be incorporated in a hydraulic circuit which extends from the front side of the semi-trailer or trailer to the steerable rear wheels. Likewise arranged at the position of these wheels are cylinder/piston combinations which are operatively connected to the steerable wheels. Through a suitable connection of the cylinder spaces on the different sides of the pistons, a displacement of the pistons on the front side of the semi-trailer or trailer is converted to a displacement of the pistons at the steerable rear wheels. In this manner a steering movement is imparted to the rear wheels, whereby the semi-trailer or trailer follows the tractive vehicle precisely during travel and the manoeuvrability of the combination of tractive vehicle and semi-trailer or trailer is improved.

In addition to automatic following of the change in direction of the tractive vehicle, the known steering system is also configured to be able to impart to the wheels of the semi-trailer or trailer a steering movement which is desirable for a determined manoeuvre and which does not correspond to the steering movement which would follow from the respective position of the tractive vehicle or the front axle assembly of the trailer. The semi-trailer or trailer can thus be readily manoeuvred in order to for instance pick up or unload a cargo. Steering corrections can also be carried out in this manner, for instance while driving over a roundabout. For this purpose the steering system is further provided with a user-operated pump and a system of controllable valves, through which hydraulic liquid can be pumped in a desired direction through the circuit in order to force the steerable wheels into a determined position.

A problem which occurs in such hydraulic steering systems is that the pressure prevailing therein can vary considerably due to outside influences. A change in the ambient temperature in particular has immediate consequences for the pressure of the hydraulic liquid in the circuit. According to data from applicant the average pressure change in steering systems thus amounts to 40 bar per 7° of temperature difference. This has the result that, when a trailer is parked outside for some time at low temperatures, the hydraulic pressure can have decreased from a set nominal value to a fraction thereof. When however the pressure in the steering system falls too low, the hydraulic liquid becomes somewhat compressible due to the presence of air in this liquid. This results in less stable steering behaviour; the steering movement becomes less precise and can be affected by for instance unevenness in the road or rutting, which can result in dangerous situations. This compressibility disappears when the trailer has been driven around for a time, wherein the temperature of the hydraulic liquid once again increases.

An associated problem is that steering systems of this type must be provided by law with a warning system which draws the attention of the user to malfunctions in the hydraulic circuit by means of for instance a light signal. Such a warning system responds to pressure loss but also to a pressure decrease in the circuit caused by low outside temperatures. Since this situation often occurs in practice every winter morning, after the vehicle has been stationary for a night at low temperature, there is a risk that after a while the user will no longer take any notice of the warning, which can result in hazardous situations in the case of actual malfunctions.

Therefore proposed in said patent NL 1029912 C2 is a steering system of the type described in the preamble wherein these problems do not occur. The system according to this older patent is provided with biasing means connected to the hydraulic circuit for bringing the circuit to a determined bias during travel with the trailer. These biasing means comprise a biasing pump placed between a supply container for hydraulic liquid and a central filling connection of the hydraulic circuit. The addition of such automatic biasing means to the steering system has the result that the hydraulic pressure in the steering circuit will always have - within determined limits - a constant value, whereby the steering behaviour of the trailer becomes more readily predictable and thus safer. Using the biasing pump the quantity of hydraulic liquid in the circuit, and thereby the pressure, can be maintained in simple manner.

The invention now has for its object to further improve the above described steering system and hydraulic control circuit.

According to a first aspect of the invention, this is achieved by a steering system having the features of claim 1. By integrating the pressure-relief valve(s) and the controllable non-return valve(s) a steering system is obtained which has fewer separate components and which can thereby be manufactured and maintained more easily and at lower cost. And because of the crosswise connection both valves are opened in the case of an overpressure on one of the two sides of the operating element acting in two directions, whereby the overpressure situation can be quickly remedied. The steering system of claim 1 allows both conduits to be wholly or substantially depressurized simultaneously in the case of an overpressure in one of the conduits.

In accordance with another aspect of the invention a hydraulic control circuit is provided which has the features of claim 15.

In an embodiment of the invention, the steering system is provided with a pressure-relief device arranged on an inlet side of the hydraulic control circuit connected to a pressure side of the pump of the active control means. Because of such a pressure-relief device at the inlet all components of the hydraulic control circuit, as well as all components connected to this circuit, are protected against overload and possible damage.

In a further embodiment of this steering system, the pressure-relief device can comprise a pressure-relief valve connected to a return conduit of the control circuit. Because of the direct connection to the return conduit the overpressure can be rapidly reduced.

According to yet another embodiment of the invention, a steering system is provided with two absorbing elements and two operating elements, wherein the control circuit comprises a single pressure sensor which is connected for signal generation to the pump of the active control means. By making use of a single pressure sensor instead of separate sensors for different conduits as in the above mentioned patent NL 1029912 C2, a steering system is obtained which can be manufactured and maintained more easily and at lower cost. There is moreover a smaller chance of malfunctions with a single sensor.

In an embodiment of the invention, a control valve is arranged on an inlet side of the hydraulic control circuit connected to a pressure side of the pump of the active control means and the hydraulic control circuit has a filling connection, wherein the filling connection is arranged upstream of the control valve. A more compact and simpler assembly of the control circuit is achieved by arranging the filling connection on the same side of the circuit as the connection to the active control means.

When use is made of a single pressure sensor in this configuration, this pressure sensor is preferably placed between the pump of the active control means and the control valve. With a single sensor there a good idea can be obtained of the pressure in the hydraulic control circuit so that for instance the biasing system can be activated in timely manner.

In yet another embodiment of the steering system according to the invention a determined pressure is maintained at the inlet side of the hydraulic control circuit between the pump of the active control means and the control valve, in particular a pressure of at least 5 bar, and preferably at least 10 bar. Pressure fluctuations resulting from temperature changes can be compensated by maintaining this pressure.

When a pressure accumulator is then connected to the filling connection, the pressure can be maintained at the determined value in simple manner and for a relatively long time.

According to yet another embodiment of the invention, the steering system is provided with controllable means connected to the hydraulic control circuit for bleeding a pressure prevailing in the control circuit. The system can be depressurized by means of such pressure-bleeding means. This is important for instance in the case of divisible trailers when two trailer parts have to be detached from or, conversely, coupled to each other. The hydraulic subsystems of the two trailer parts must here also be uncoupled or, conversely, coupled, for which purpose use is usually made of hydraulic rapid-action couplings. Prior to detachment or coupling the system must be depressurized in order to facilitate release and attachment of the hydraulic rapid-action couplings. This moreover prevents loss of hydraulic liquid occurring at the position of the coupling.

When the pressure-bleeding means are connectable to a return conduit of the control circuit, the hydraulic liquid can be easily returned to for instance a supply tank.

When the steering system is provided with two absorbing elements and two operating elements, and when the hydraulic control circuit comprises at least two conduits connecting the absorbing elements to the operating elements, the pressure-bleeding means for each conduit can comprise a pressure-bleeding valve. Each conduit can thus be depressurized quickly and easily. The outfeeds of the different pressure-bleeding valves can be connected here via a collection conduit to the return conduit of the control circuit.

The hydraulic control circuit is preferably accommodated in a housing. Because of such a housing, also referred to as control block or manifold, a compact unit is obtained which is easy to handle and which can be mounted at a desired position on the trailer.

The pressure-bleeding means can here also be accommodated in the housing. Different functions of the control circuit are thus structurally integrated, this enhancing simplicity.

The invention also relates to a trailer comprising a frame, a chassis supporting the frame and comprising a number of wheels, at least some of which are steerable, and means connected to the frame for coupling the trailer to a tractive vehicle. Such a trailer is generally known.

A trailer according to the invention is distinguished from conventional trailers of this type by a steering system as described above arranged between the coupling means and the steerable wheels.

In an embodiment of the trailer the at least one hydraulic absorbing element is connected to the coupling means. A movement of the coupling means, for instance a fifth-wheel coupling or a front axle assembly with pole, is thus easily converted to a corresponding steering movement of the steerable wheels.

The invention is now elucidated on the basis of an embodiment, wherein reference is made to the accompanying drawing, in which:
Fig. 1 is a schematic side view of a trailer in which a steering system according to the invention is applied,
Fig. 2 shows a schematic diagram of an embodiment of the steering system according to the invention,
Fig. 3 shows on enlarged scale a detail of the steering system of fig. 2, and
Fig. 4 is a perspective view of a housing or control block in which a hydraulic control circuit according to the invention is received.

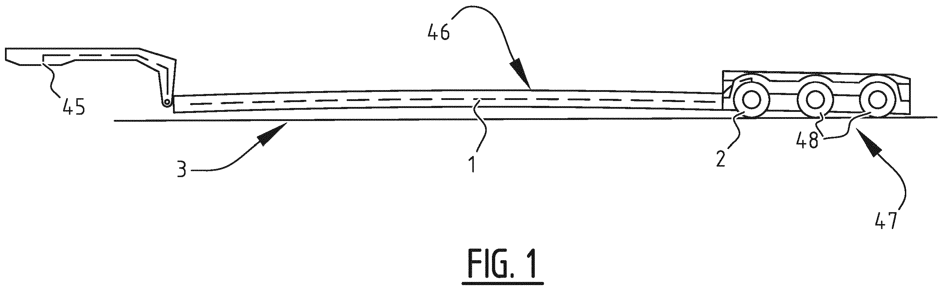

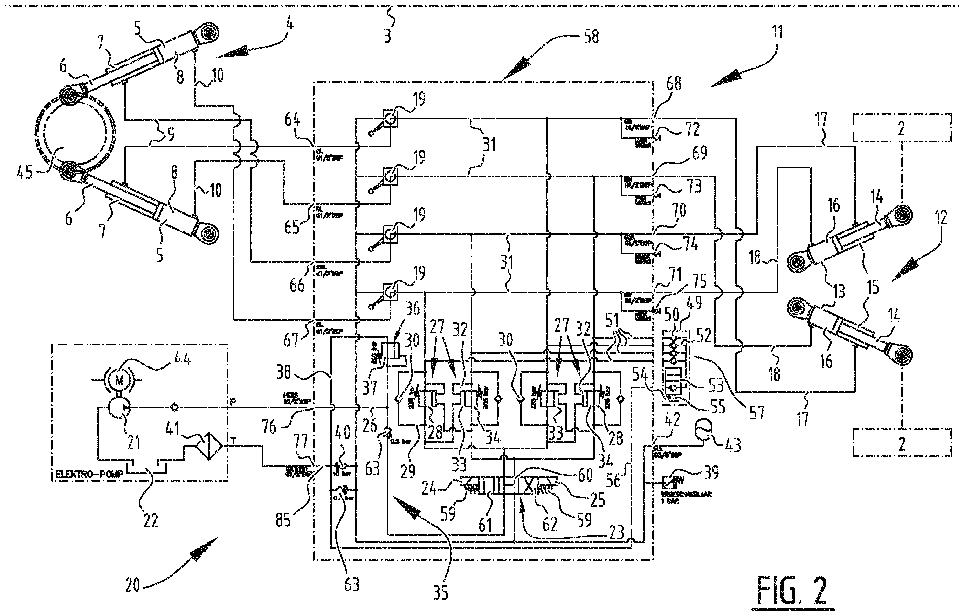

A trailer 3 (fig. 1) comprises a frame 46, a chassis 47 supporting the frame and means 45 connected to frame 46 for coupling trailer 3 to a tractive vehicle (not shown here). Chassis 47 comprises in this example a first axle line with directly steerable wheels 2 and two axle lines 48 with wheels having steering movements which are derived from those of the directly steerable wheels 2. A system 1 for steering the directly steerable wheels 2 of trailer 3 which is arranged between coupling means 45 and steerable wheels 2 comprises two hydraulic elements 4 (fig. 2) for absorbing movements of the tractive vehicle. These hydraulic absorbing elements 4, which are connected here to the schematically shown coupling means 45, are each formed by a cylinder having a piston 6 therein which divides cylinder 5 into two chambers 7, 8. Connected to each chamber 7, 8 is a conduit 9, 10 which forms part of a hydraulic control circuit 11.

This hydraulic control circuit 11 leads to two hydraulic operating elements 12, which are each connected to one of the steerable wheels 2. Each hydraulic operating element 12 is again formed by a cylinder 13 in which a piston 14 is movably received. Piston 14 divides cylinder 13 into two chambers 15, 16, which are each connected to a conduit 17, 18 of the hydraulic control circuit.

Hydraulic control circuit 11 further comprises four taps 19 for mutually uncoupling absorbing elements 4 and operating elements 12 as required.

Hydraulic control circuit 11 is designed such that both conduits 9 running from chambers 7 of absorbing elements 4 are connected to conduits 17 running to chambers 15 of operating elements 12, while conduits 10 running from chambers 8 are connected to conduits 18 running to chambers 16. In this manner chambers 7, 8 and 15, 16 are as it were connected in parallel, in the sense that a chamber for the associated piston in the one cylinder is connected in each case to a corresponding chamber for the piston in the other cylinder, and vice versa.

Due to this arrangement, when taps 19 are positioned such that absorbing elements 4 and operating elements 12 are connected to each other, steering movements of the tractive vehicle which result in the retracting or extending of pistons 6 of absorbing elements 4 are transmitted via hydraulic control circuit 11 to operating elements 12, the pistons 14 of which elements are then extended or retracted so that a steering movement is imparted to wheels 2.

The components of steering system 1 described up to this point provide for a passive or forced steering, wherein hydraulic absorbing elements 4 and operating elements 12 connected thereto ensure that steerable wheels 2 automatically follow the movements of the tractive vehicle relative to trailer 3 during travel.

In addition however, steering system 1 also comprises means 20 with which wheels 2 can be actively steered. Such an active steering or steering adjustment is important when for a determined manoeuvre wheels 2 must have a movement other than that which they make on the basis of the position of the tractive vehicle, for instance when driving over a roundabout or during precise manoeuvres on a factory site.

These active control means 20 comprise a pump 21 which is driven by an electric motor 44 and with which hydraulic liquid can be carried from a tank 22 into circuit 11 via a pressure line 26. In addition, active control means 20 comprise a control valve 23 with three positions, using which the direction in which the liquid is pumped into hydraulic control circuit 11 can be selected by a user. Active control means 20 also comprise a return conduit 85 from control valve 23 to tank 22.

Control valve 23 is embodied here as an electronically operated control slide valve with automatic middle position which receives control commands inputted by the user via a control panel or a remote control, whereby the slide valve can be moved to the left or right. For this purpose one of the coils 24, 25 acting on control slide valve 23 can be energized as desired so that the slide valve is moved in the desired direction counter to the action of two springs 59. One of the two conduits segments 61, 62 in the hydraulic control circuit 11 is hereby connected instead of the middle segment 60 functioning as closing valve.

The left conduit segment 61 connects pressure line 26 to bypass lines 29 of the first and third integrated valve units 27 (as seen from left to right), and so to chamber 16 of the upper hydraulic operating element 12 (as seen in the drawing) and to chamber 15 of the lower operating element 12. Piston 14 of the one operating element 12 is hereby extended and that of the other retracted so that wheels 2 on either side of trailer 3 undergo a steering movement in the same direction. The hydraulic liquid which is forced out of the opposite chamber 15 of respectively the upper operating element 12 and chamber 16 of lower operating element 12 by the movement of piston 14 is fed via respectively the second and the fourth integrated valve unit 27 back to the left conduit segment 61 of control valve 23, and from there via return conduit 85 to tank 22. This will however only take place when the pressure of the hydraulic liquid in these chambers exceeds the opening pressure of pressure-relief valves 28. As long as this is not the case, the hydraulic liquid will remain in circuit 11 and will then increase the pressure there.

In similar manner the right conduit segment 62 connects pressure line 26 to bypass lines 29 of the second and fourth integrated valve units 27, and so to chamber 15 of the upper hydraulic operating element 12 and to chamber 15 of the lower operating element 12. This results in a steering movement of wheels 2 in the opposite direction. Here too the hydraulic liquid from the other chambers of operating elements 12 is fed back via the other valve units, so here the first and third integrated valve unit.

In the known system according to NL 1029912 C2 the active control means comprise a system of controlled non-return valves with crosswise-connected control lines, which valves are connected between the control valve and the hydraulic operating elements. In addition, the automatic or passive control according to NL 1029912 C2 comprises a number of pressure-relief valves, each with a bypass line with a non-return valve therein. These pressure-relief valves are connected between the hydraulic absorbing elements and the taps.

According to an aspect of the invention, the controlled non-return valves and the pressure-relief valves are integrated in each case in a single valve unit 27, of which there are therefore four in the shown embodiment. Each integrated valve unit comprises a pressure-relief valve 28, a bypass line 29 and a non-return valve 30 accommodated therein. Because of the integration of different functions in each valve unit 27 the number of separate components in the circuit can be minimized. In the shown embodiment the integrated valve units 27 are connected parallel to conduit parts 31 between taps 19 and chambers 15, 16 of hydraulic operating elements 12.

Each pressure-relief valve 28 has two inlets, a first inlet 32 on which the pressure prevailing in the associated conduit part 31 acts, and a second inlet 33 on which the pressure prevailing downstream of the adjacent pressure-relief valve 28 acts. The adjacent pressure-relief valve 28 forms part of the valve unit connected to the same hydraulic absorbing element 4. Outlet 34 of each pressure-relief valve 28 is connected to bypass line 29 of its own valve unit and to that of a valve unit 27 connected to the hydraulic operating element 12 other than that to which the associated absorbing element 4 is connected. In the case of an overpressure, here a pressure of more than 235 bar, the different conduits of hydraulic control circuit 11 are thus connected crosswise to each other. In addition, outlet 34 of each pressure-relief valve 28 is connected as control signal to second inlet 33 of both the adjacent pressure-relief valve 28 and a pressure-relief valve 28 adjacent to valve unit 27, the bypass line 29 of which is utilized.

Hydraulic control unit 11 comprises a biasing part 35 situated between pump 21 of active control means 20 and control valve 23. Because the biasing part is located on the same side of control valve 23 as pump 21, there is no necessity for a separate filling opening at another position within hydraulic control circuit 11, as was the case in the system according to NL 1029912 C2. This further simplifies the circuit. A determined minimal pressure is maintained in this biasing part 35, for instance a pressure of 5 bar, or even of 10 bar. Because of this minimal pressure or bias in biasing part 35 the pressure in steering system 1 will as a whole always be constant within determined limits. The steering behaviour of the trailer hereby becomes more readily predictable and thus safer. Pressure fluctuations resulting from temperature differences can be compensated by the bias.

A pressure-relief device 36 is incorporated in biasing part 35. This pressure-relief device 36 prevents hydraulic control circuit 11 as a whole being exposed to an overpressure. In the shown embodiment this safety device comprises a pressure-relief valve 37 which is connected in parallel to control valve 23 and which is connected via a pressure-relief line 38 to return conduit 85 of active control means 20. Pressure-relief valve 37 can for instance have an opening pressure of 200 bar.

In order to hold biasing part 35 at tension use is made of the - in this example electrically driven - pump 21 of the active control means. The pressure in biasing part 35 is detected by a central pressure sensor 39 connected to return conduit 85. The assembly of hydraulic control circuit 11 is further simplified by making use of a central sensor 39 instead of separate sensors connected to the different conduits as in NL 1029912 C2.

When too low a pressure is detected in biasing part 35, pump 21 is started and hydraulic liquid is pressed through pressure line 26. When control valve 23 takes up the shown middle position, the liquid is again fed back through return conduit 85 to tank 22, wherein it must pass through a non-return valve 40 with adjustable resistance. This non-return valve 40 is set to the desired value of the bias, for instance 10 bar. As long as the pressure in biasing part 35 is lower than 10 bar, non-return valve 40 will thus not open, and pump 21 will therefore have to supply more pressure. As soon as the opening pressure of 10 bar is reached, the hydraulic liquid can flow to tank 22 until the pressure in biasing part 35 once again drops below the opening pressure. A filter 41 is further also arranged in tank 22.

Two adjustable non-return valves 63 are further arranged in biasing part 35, whereby hydraulic liquid can be drawn from pressure line 26 or return conduit 85 in order to compensate pressure fluctuations which can be the result of for instance the difference between an inward and outward stroke of a hydraulic operating element 12. These non-return valves 63 are set here to a very low opening pressure of for instance 0.2 bar.

Further connected to biasing part 35 is a filling opening 42 through which hydraulic liquid can be supplied from an external source. Connected to filling opening 42 in the shown embodiment is an accumulator 43 which is filled with hydraulic liquid as long as pump 21 is operational. A determined quantity of liquid is thus collected in this accumulator 43 under the pressure developed by pump 21 and held in place by non-return valve 40. When pump 21 is not operational and pressure fluctuations occur as a result of temperature differences, these can be compensated by the liquid in accumulator 43.

In the shown embodiment the steering system 1 is further provided with controllable means 49 for bleeding a pressure prevailing in hydraulic control circuit 11. These pressure-bleeding means 49, which are connected to circuit 11, are particularly important when steering system 1 is applied in a divisible trailer. The hydraulic systems of the different parts must in that case be connected to each other when the trailer is assembled, or be uncoupled when the trailer is divided. To this end the hydraulic subsystems have to be depressurized.

Pressure-bleeding means 49 comprise in the shown embodiment four pressure-bleeding valves 50 which can each be connected to a pressure-bleeding line 51 which is connected to one of the conduits parts 31. Pressure-bleeding valves 50 are received in conduits 52 which come together in a controllable main pressure-bleeding valve 53. This main valve 53 is biased to its closed position by a spring 54 and can be opened by operating a button 55. The main pressure-bleeding valve 53 can be connected to a central pressure-bleeding line 56 leading to tank 22. Pressure-bleeding means 49 are accommodated here in a separate housing 57 which can be connected to a housing 58 - also referred to as control block or manifold - in which the other components of hydraulic control circuit 11 are accommodated. It is otherwise also possible to envisage pressure-bleeding means 49 being integrated with the rest of circuit 11 in the housing or control block 58.

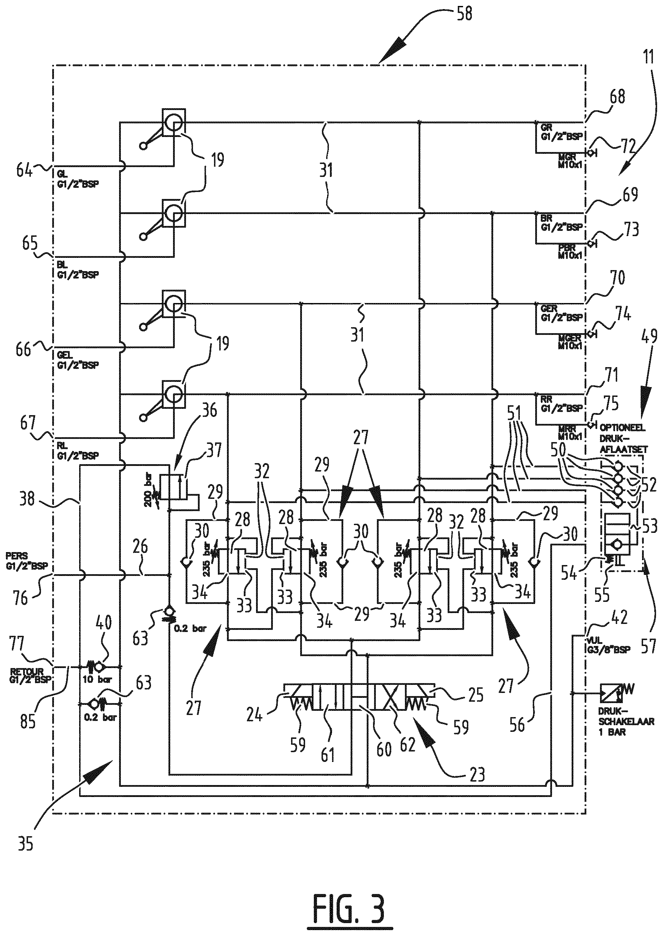

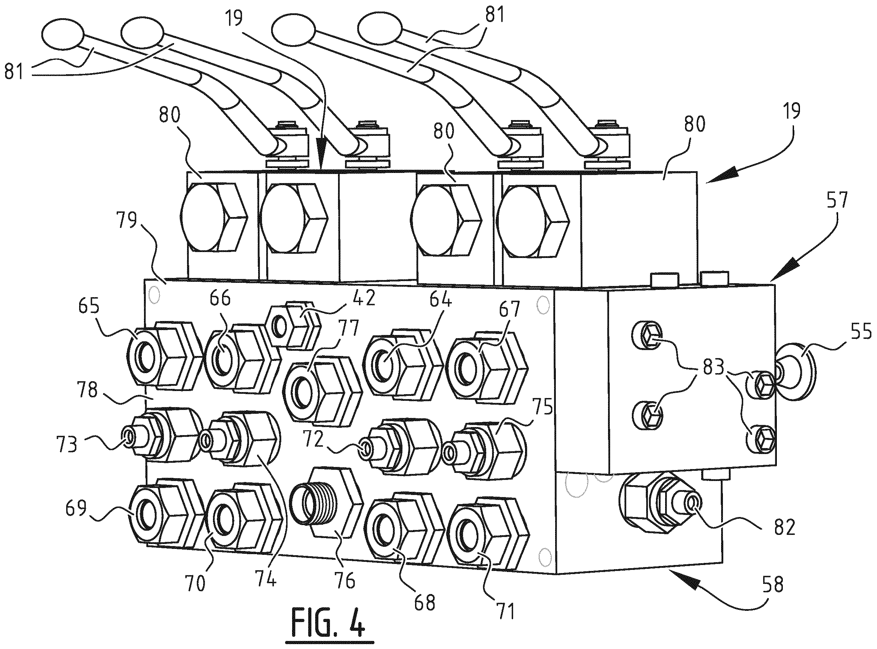

Housing or control block 58 is provided with a large number of connections (fig. 4). There are thus connections 64-67 for conduits 9, 10 of the two hydraulic absorbing elements 4. These connections 64-67 are also indicated in diagrams with the colours green (G), blue (B), yellow (GE) and red (R) as seen from top to bottom in fig. 2 and fig. 3 and the suffix L (for the left-hand side of the diagram). Control block 58 also has four connections 68-71 for conduits 17, 18 to the two hydraulic operating elements 12, also referred to as GR, BR, GER and RR. Situated therebetween are connections 72-75 with which each of the conduits 17, 18 can be separately brought under pressure with hydraulic liquid from an external source. This can take place in order to realize a purely manual steering of each wheel 2 individually, or for test purposes. Further shown are a connection 76 for the pressure line and a connection 77 for the return conduit, as well as filling connection 42. All these connections are brought together in a wall 78 of control block 58, whereby connection of conduits to control block 58 is relatively simple.

Arranged on another wall 79 of the control block are four blocks 80 in which taps 19 are accommodated. These taps can be operated separately by hand with handles 81. In the shown embodiment housing 57 of pressure-bleeding means 49 is fixed against a short wall 82 of control block 58 by means of four fastening elements 83. As stated, the pressure-bleeding mechanism is not necessary when steering system 1 is used for a non-divisible trailer. Housing 57 can in that case be omitted and the ends of pressure-bleeding lines 51 can be closed, for instance capped.

The operation of the above described steering system 1 is now as follows.

When the taps are in the position as shown in figures 2 and 3, hydraulic absorbing elements 4 are directly connected via conduits 9, 10, conduits parts 31 and conduits 17, 18 to the hydraulic operating elements 12. The steerable wheels 2 then follow the movements of coupling means 45.

In this situation steering of wheels 2 can also be adjusted by activating pump 21 and moving control valve 23 to one of the two sides by energizing the solenoid 24 or 25. Depending on the position of control valve 23, the pressure in one of the conduits 17 and in one of the conduits 18 is then increased so that a steering movement of wheels 2 as a result of a movement of coupling means 45 is reinforced or, conversely, counteracted.

When taps 19 are switched, hydraulic operating elements 12 are uncoupled from hydraulic absorbing elements 4. Conduits 9, 10 are then connected to a collection conduit 84 leading to return conduit 85 and tank 22, while conduits 17, 18 leading to hydraulic operating elements 12 are still connected to pump 21 of active control means 20 only via the integrated valve units 27 and control valve 23.

As long as control valve 23 then remains in its closed middle position, operating elements 12 are wholly isolated from a central source of hydraulic liquid and they can be moved only by supplying hydraulic liquid via the associated connections 72-75. This case relates to a purely manual operation.

As soon as control valve 23 is moved out of its middle position, operating elements 12 are connected to biasing part 35 and they can be supplied with hydraulic liquid, either by activating pump 21 or from accumulator 43. Depending on the position of control valve 23, wheels 2 are then moved in the one or the other direction. This method of controlling wheels 2 can be applied by itself, or in combination with the above described manual control.

The invention thus makes it possible with relatively simple means to steer the wheels 2 of a trailer 3 in many different ways in passive or following manner as well as actively. Functions of the steering system are integrated as far as possible here in order to minimize the number of separate components and to simplify the assembly of the hydraulic control circuit as much as possible.

Although the invention is described above with reference to an embodiment, it will be apparent that it is not limited thereto but can be varied in many ways. The biasing part of the circuit could thus be embodied with a mechanically or pneumatically driven pump instead of an electrically driven pump. The placing options for the different components could also be other than in the embodiment shown here. In addition, the different new aspects of the system could also be applied individually while retaining the associated advantages. The scope of the invention is therefore defined solely by the following claims.

## Claims

1. System (1) for steering steerable wheels (2) of a trailer (3), comprising:
- a hydraulic control circuit (11);
- at least one hydraulic element (4) for absorbing a movement of a vehicle pulling the trailer (3), which hydraulic absorbing element (4) is connected for signal generation to the hydraulic control circuit (11),
- at least one hydraulic operating element (12) connected to the hydraulic control circuit (11) and acting on a steerable wheel (2), and
- means (20) connected to the hydraulic control circuit (11) for actively steering the steerable wheels (2), which active control means (20) comprise a pump (21),
wherein the hydraulic control circuit (11) comprises at least one pressure-relief valve (28) arranged between the at least one absorbing element (4) and the at least one operating element (12) and at least one non-return valve (30) arranged between the pump (21) of the active control means (20) and the at least one operating element (12),
wherein the at least one pressure-relief valve (28) and the at least one non-return valve (30) are integrated in a single valve unit (27), and
wherein the at least one operating element (12) acts in two directions and at least two integrated valve units (27) connected in crosswise manner are incorporated in the hydraulic control circuit (11),
**characterized in that** the at least one operating element (12) has two chambers (15, 16) and a hydraulic conduit (31) connecting the pump (21) of the active control means (20) to one (15) of the chambers has a branch which is connected as control line to the integrated valve unit (27) received in a conduit (31) connecting the pump (21) to the other chamber (16).

2. System (1) as claimed in claim 1, **characterized by** a pressure-relief device (36) arranged on an inlet side of the hydraulic control circuit (11) connected to a pressure side of the pump (21) of the active control means (20).

3. System (1) as claimed in claim 2, **characterized in that** the pressure-relief device (36) comprises a pressure-relief valve (37) connected to a return conduit (85) of the hydraulic control circuit (11).

4. System (1) as claimed in any of the foregoing claims, **characterized by** two absorbing elements (4) and two operating elements (12), wherein the hydraulic control circuit (11) comprises a single pressure sensor (39) which is connected for signal generation to the pump (21) of the active control means (20).

5. System (1) as claimed in any of the foregoing claims, **characterized in that** a control valve (23) is arranged on an inlet side of the hydraulic control circuit (11) connected to a pressure side of the pump (21) of the active control means (20) and that the hydraulic control circuit (11) has a filling connection (42), wherein the filling connection (42) is arranged upstream of the control valve (23).

6. System (1) as claimed in claims 4 and 5, **characterized in that** the single pressure sensor (39) is placed between the pump (21) of the active control means (20) and the control valve (23).

7. System (1) as claimed in claim 5 or 6, **characterized in that** a determined pressure is maintained at the inlet side of the hydraulic control circuit (11) between the pump (21) of the active control means (20) and the control valve (23), in particular a pressure of at least 5 bar, and preferably at least 10 bar.

8. System (1) as claimed in claim 7, **characterized in that** a pressure accumulator (43) is connected to the filling connection (42).

9. System (1) as claimed in any of the foregoing claims, **characterized by** controllable means (49) connected to the hydraulic control circuit (11) for bleeding a pressure prevailing in the hydraulic control circuit (11).

10. System (1) as claimed in claim 9, **characterized in that** the pressure-bleeding means (49) are connectable to a return conduit (85) of the hydraulic control circuit (11).

11. System (1) as claimed in claim 9 or 10, **characterized by** two absorbing elements (4) and two operating elements (12), wherein the hydraulic control circuit (11) comprises at least two conduits (31) connecting the absorbing elements (4) to the operating elements (12), and the pressure-bleeding means (49) for each conduit (31) comprise a pressure-bleeding valve (51).

12. System (1) as claimed in any of the foregoing claims, **characterized in that** the hydraulic control circuit (11) is accommodated in a housing (58), optionally wherein the pressure-bleeding means (49) are accommodated in the housing (58).

13. Trailer (3), comprising a frame (46), a chassis (47) supporting the frame (46) and comprising a number of wheels (2), at least some of which are steerable, and means (45) connected to the frame (46) for coupling the trailer (3) to a tractive vehicle, **characterized by** a system (1) as claimed in any of the foregoing claims arranged between the coupling means (45) and the steerable wheels (2).

14. Trailer (3) as claimed in claim 13, **characterized in that** the at least one hydraulic absorbing element (4) is connected to the coupling means (45).

15. Hydraulic control circuit (11) for use in a system (1) for steering steerable wheels (2) of a trailer (3) as claimed in any of the claims 1-12, said hydraulic control circuit (11) comprising at least one pressure-relief valve (28) and at least one non-return valve (30),
wherein the hydraulic control circuit (11) is connectable for signal reception to at least one hydraulic element (4) for absorbing a movement of a vehicle pulling the trailer (3),
wherein the hydraulic control circuit (11) is further connectable to at least one hydraulic operating element (12) connected to the hydraulic control circuit (11) and acting on a steerable wheel (2),
wherein the hydraulic control circuit (11) is further connectable to means (20) for actively steering the steerable wheels (2), which active control means (20) comprise a pump (21),
wherein the at least one pressure-relief valve (28) is arranged between the at least one absorbing element (4) and the at least one operating element (12), and
wherein the at least one non-return valve (30) is arranged between the pump (21) of the active control means (20) and the at least one operating element (12),
wherein the at least one pressure-relief valve (28) and the at least one non-return valve (30) are integrated in a single valve unit (27), and
wherein the at least one operating element (12) acts in two directions and at least two integrated valve units (27) connected in crosswise manner are incorporated in the hydraulic control circuit (11),
**characterized in that** the at least one operating element (12) has two chambers (15, 16) and a hydraulic conduit (31) connecting the pump (21) of the active control means (20) to one (15) of the chambers has a branch which is connected as control line to the integrated valve unit (27) received in a conduit (31) connecting the pump (21) to the other chamber (16).

## Patentansprüche

1. System (1) zum Lenken von lenkbaren Rädern (2) eines Anhängers (3), umfassend:
- einen hydraulischen Steuerkreis (11);
- mindestens ein Hydraulikelement (4) zur Absorption einer Bewegung des den Anhänger (3) ziehenden Fahrzeugs, wobei das hydraulische Absorptionselement (4) zur Signalerzeugung mit dem hydraulischen Steuerkreis (11) verbunden ist,
- mindestens ein mit dem hydraulischen Steuerkreis (11) verbundenes hydraulisches Betätigungselement (12), das auf ein lenkbares Rad (2) einwirkt, und
- ein mit dem hydraulischen Steuerkreis (11) verbundenes Mittel (20) zum aktiven Lenken der lenkbaren Räder (2), wobei das aktive Steuermittel (20) eine Pumpe (21) umfasst,
wobei der hydraulische Steuerkreis (11) mindestens ein zwischen dem mindestens einen Absorptionselement (4) und dem mindestens einen Betätigungselement (12) angeordnetes Überdruckventil (28) und mindestens ein zwischen der Pumpe (21) der aktiven Steuermittel (20) und dem mindestens einen Betätigungselement (12) angeordnetes Rückschlagventil (30) umfasst,
wobei das mindestens eine Überdruckventil (28) und das mindestens eine Rückschlagventil (30) in einer einzigen Ventileinheit (27) integriert sind, und
wobei das mindestens eine Betätigungselement (12) in zwei Richtungen wirkt und mindestens zwei quer geschaltete integrierte Ventileinheiten (27) in den hydraulischen Steuerkreis (11) eingebunden sind,
**dadurch gekennzeichnet, dass** das mindestens eine Bedienelement (12) zwei Kammern (15, 16) aufweist und eine Hydraulikleitung (31), die die Pumpe (21) des aktiven Steuermittels (20) mit einer (15) der Kammern verbindet, eine Abzweigung aufweist, die als Steuerleitung mit der integrierten Ventileinheit (27) verbunden ist, die in einer Leitung (31) aufgenommen ist, die die Pumpe (21) mit der anderen Kammer (16) verbindet.

2. System (1) nach Anspruch 1, **gekennzeichnet durch** eine Druckentlastungsvorrichtung (36), die an einer Eingangsseite des hydraulischen Steuerkreises (11) angeordnet ist, die mit einer Druckseite der Pumpe (21) des aktiven Steuermittels (20) verbunden ist.

3. System (1) nach Anspruch 2, **dadurch gekennzeichnet, dass** die Druckentlastungsvorrichtung (36) ein Überdruckventil (37) umfasst, das mit einer Rücklaufleitung (85) des hydraulischen Steuerkreises (11) verbunden ist.

4. System (1) nach einem der vorhergehenden Ansprüche, **gekennzeichnet durch** zwei Absorptionselemente (4) und zwei Betätigungselemente (12), wobei der hydraulische Steuerkreis (11) einen einzigen Drucksensor (39) aufweist, der zur Signalerzeugung mit der Pumpe (21) des aktiven Steuermittels (20) verbunden ist.

5. System (1) nach einem der vorhergehenden Ansprüche, **dadurch gekennzeichnet, dass** an einer Eingangsseite des hydraulischen Steuerkreises (11) ein Steuerventil (23) angeordnet ist, das mit einer Druckseite der Pumpe (21) des aktiven Steuermittels (20) verbunden ist, und dass der hydraulische Steuerkreis (11) einen Füllanschluss (42) aufweist, wobei der Füllanschluss (42) stromaufwärts des Steuerventils (23) angeordnet ist.

6. System (1) nach Anspruch 4 und 5, **dadurch gekennzeichnet, dass** der einzige Drucksensor (39) zwischen der Pumpe (21) des aktiven Steuermittels (20) und dem Steuerventil (23) angeordnet ist.

7. System (1) nach Anspruch 5 oder 6, **dadurch gekennzeichnet, dass** ein bestimmter Druck auf der Eingangsseite des hydraulischen Steuerkreises (11) zwischen der Pumpe (21) des aktiven Steuermittels (20) und dem Steuerventil (23) aufrechterhalten wird, insbesondere ein Druck von mindestens 5 bar, vorzugsweise von mindestens 10 bar.

8. System (1) nach Anspruch 7, **dadurch gekennzeichnet, dass** an den Füllanschluss (42) ein Druckspeicher (43) angeschlossen ist.

9. System (1) nach einem der vorhergehenden Ansprüche, **gekennzeichnet durch** mit dem hydraulischen Steuerkreis (11) verbundene steuerbare Mittel (49) zum Ablassen des im hydraulischen Steuerkreis (11) herrschenden Druckes.

10. System (1) nach Anspruch 9, **dadurch gekennzeichnet, dass** die Druckablassmittel (49) mit einer Rücklaufleitung (85) des hydraulischen Steuerkreises (11) verbindbar sind.

11. System (1) nach Anspruch 9 oder 10, **gekennzeichnet durch** zwei Absorptionselemente (4) und zwei Betätigungselemente (12), wobei der hydraulische Steuerkreis (11) mindestens zwei Leitungen (31) umfasst, die die Absorptionselemente (4) mit den Betätigungselementen (12) verbinden, und die Druckablassmittel (49) für jede Leitung (31) ein Druckentlastungsventil (51) umfassen.

12. System (1) nach einem der vorangehenden Ansprüche, **dadurch gekennzeichnet, dass** der hydraulische Steuerkreis (11) in einem Gehäuse (58) untergebracht ist, wobei die Druckablassmittel (49) optional in dem Gehäuse (58) untergebracht sind.

13. Anhänger (3), umfassend einen Rahmen (46), ein den Rahmen (46) tragendes Fahrgestell (47) mit einer Anzahl von Rädern (2), von denen zumindest einige lenkbar sind, und mit dem Rahmen (46) verbundene Mittel (45) zum Ankuppeln des Anhängers (3) an ein Zugfahrzeug, **gekennzeichnet durch** ein System (1) nach einem der vorangehenden Ansprüche, das zwischen den Kupplungsmitteln (45) und den lenkbaren Rädern (2) angeordnet ist.

14. Anhänger (3) nach Anspruch 13, **dadurch gekennzeichnet, dass** das mindestens eine hydraulische Absorptionselement (4) mit dem Kupplungsmittel (45) verbunden ist.

15. Hydraulischer Steuerkreis (11) zur Verwendung in einem System (1) zum Lenken lenkbarer Räder (2) eines Anhängers (3) nach einem der Ansprüche 1 bis 12, wobei der hydraulische Steuerkreis (11) mindestens ein Überdruckventil (28) und mindestens ein Rückschlagventil (30) umfasst,
wobei der hydraulische Steuerkreis (11) zum Signalempfang mit mindestens einem hydraulischen Element (4) zum Absorbieren einer Bewegung eines den Anhänger (3) ziehenden Fahrzeugs verbindbar ist,
wobei der hydraulische Steuerkreis (11) ferner mit mindestens einem hydraulischen Betätigungselement (12) verbindbar ist, das mit dem hydraulischen Steuerkreis (11) verbunden ist und auf ein lenkbares Rad (2) wirkt,
wobei der hydraulische Steuerkreis (11) ferner mit einem Mittel (20) zum aktiven Lenken der lenkbaren Räder (2) verbindbar ist, wobei das aktive Steuermittel (20) eine Pumpe (21) umfasst,
wobei das mindestens eine Überdruckventil (28) zwischen dem mindestens einen Absorptionselement (4) und dem mindestens einen Betätigungselement (12) angeordnet ist, und
wobei das mindestens eine Rückschlagventil (30) zwischen der Pumpe (21)
des aktiven Steuermittels (20) und dem mindestens einen Betätigungselement (12) angeordnet ist,
wobei das mindestens eine Überdruckventil (28) und das mindestens eine Rückschlagventil (30) in einer einzigen Ventileinheit (27) integriert sind, und
wobei das mindestens eine Betätigungselement (12) in zwei Richtungen wirkt und mindestens zwei integrierte, kreuzweise verbundene Ventileinheiten (27) in den hydraulischen Steuerkreis (11) integriert sind,
**dadurch gekennzeichnet, dass** das mindestens eine Betätigungselement (12) zwei Kammern (15, 16) aufweist und eine die Pumpe (21) des aktiven Steuermittels (20) mit einer (15) der Kammern verbindende Hydraulikleitung (31) eine Abzweigung aufweist, die als Steuerleitung mit der integrierten Ventileinheit (27) verbunden ist, die in einer die Pumpe (21) mit der anderen Kammer (16) verbindenden Leitung (31) aufgenommen ist.

## Revendications

1. Système (1) de direction de roues dirigeables (2) d'une remorque (3), comprenant :
- un circuit de commande hydraulique (11) ;
- au moins un élément hydraulique (4) pour absorber un déplacement d'un véhicule tractant la remorque (3), lequel élément absorbant hydraulique (4) est raccordé pour une génération de signal au circuit de commande hydraulique (11),
- au moins un élément d'actionnement hydraulique (12) raccordé au circuit de commande hydraulique (11) et agissant sur une roue dirigeable (2), et
- des moyens (20) raccordés au circuit de commande hydraulique (11) pour diriger activement les roues dirigeables (2), lesquels moyens (20) de commande active comprennent une pompe (21),
dans lequel le circuit de commande hydraulique (11) comprend au moins une soupape de surpression (28) agencée entre l' au moins un élément absorbant (4) et l' au moins un élément d'actionnement (12) et au moins un clapet antiretour (30) agencé entre la pompe (21) des moyens (20) de commande active et l'au moins un élément d'actionnement (12),
dans lequel l'au moins une soupape de surpression (28) et l'au moins un clapet antiretour (30) sont intégrés dans une seule unité de soupape (27), et
dans lequel l'au moins un élément d'actionnement (12) agit dans deux directions et au moins deux unités de soupape (27) intégrées raccordées en croix sont incorporées dans le circuit de commande hydraulique (11),
**caractérisé en ce que** l'au moins un élément d'actionnement (12) a deux chambres (15, 16) et un conduit hydraulique (31) raccordant la pompe (21) des moyens (20) de commande active à l'une (15) des chambres a une branche qui est raccordée en tant que ligne de commande à l'unité de soupape (27) intégrée reçue dans un conduit (31) raccordant la pompe (21) à l'autre chambre (16).

2. Système (1) selon la revendication 1, **caractérisé par** un dispositif de surpression (36) agencé sur un côté entrée du circuit de commande hydraulique (11) raccordé à un côté pression de la pompe (21) des moyens (20) de commande active.

3. Système (1) selon la revendication 2, **caractérisé en ce que** le dispositif de surpression (36) comprend une soupape de surpression (37) raccordée à un conduit de retour (85) du circuit de commande hydraulique (11).

4. Système (1) selon l'une quelconque des revendications précédentes, **caractérisé par** deux éléments absorbants (4) et deux éléments d'actionnement (12), dans lequel le circuit de commande hydraulique (11) comprend un seul capteur de pression (39) qui est raccordé pour une génération de signal à la pompe (21) des moyens (20) de commande active.

5. Système (1) selon l'une quelconque des revendications précédentes, **caractérisé en ce qu'**une soupape de commande (23) est agencée sur un côté entrée du circuit de commande hydraulique (11) raccordé à un côté pression de la pompe (21) des moyens (20) de commande active et **en ce que** le circuit de commande hydraulique (11) a un raccordement de chargement (42), dans lequel le raccordement de chargement (42) est agencé en amont de la soupape de commande (23).

6. Système (1) selon les revendications 4 et 5, **caractérisé en ce que** le capteur de pression unique (39) est placé entre la pompe (21) des moyens (20) de commande active et la soupape de commande (23).

7. Système (1) selon la revendication 5 ou 6, **caractérisé en ce qu'**une pression déterminée est maintenue au niveau du côté entrée du circuit de commande hydraulique (11) entre la pompe (21) des moyens (20) de commande active et la soupape de commande (23), en particulier une pression d'au moins 5 bar, et de préférence d'au moins 10 bar.

8. Système (1) selon la revendication 7, **caractérisé en ce qu'**un accumulateur de pression (43) est raccordé au raccordement de chargement (42).

9. Système (1) selon l'une quelconque des revendications précédentes, **caractérisé par** des moyens commandables (49) raccordés au circuit de commande hydraulique (11) pour purger une pression existant dans le circuit de commande hydraulique (11).

10. Système (1) selon la revendication 9, **caractérisé en ce que** les moyens (49) de purge de pression peuvent être raccordés à un conduit de retour (85) du circuit de commande hydraulique (11).

11. Système (1) selon la revendication 9 ou 10, **caractérisé par** deux éléments absorbants (4) et deux éléments d'actionnement (12), dans lequel le circuit de commande hydraulique (11) comprend au moins deux conduits (31) raccordant les éléments absorbants (4) aux éléments d'actionnement (12), et les moyens (49) de purge de pression pour chaque conduit (31) comprennent une soupape de purge de pression (51).

12. Système (1) selon l'une quelconque des revendications précédentes, **caractérisé en ce que** le circuit de commande hydraulique (11) est logé dans un boîtier (58), facultativement dans lequel les moyens (49) de purge de pression sont logés dans le boîtier (58).

13. Remorque (3), comprenant un bâti (46), un châssis (47) supportant le bâti (46) et comprenant un nombre de roues (2), dont au moins certaines sont dirigeables, et des moyens (45) raccordés au bâti (46) pour accoupler la remorque (3) à un véhicule de traction, **caractérisée par** un système (1) tel que revendiqué dans l'une quelconque des revendications précédentes agencé entre les moyens (45) d'accouplement et les roues dirigeables (2).

14. Remorque (3) selon la revendication 13, **caractérisée en ce que** l'au moins un élément absorbant (4) hydraulique est raccordé aux moyens (45) d'accouplement.

15. Circuit de commande hydraulique (11) pour une utilisation dans un système (1) de direction de roues dirigeables (2) d'une remorque (3) tel que revendiqué dans l'une quelconque des revendications 1 à 12, ledit circuit de commande hydraulique (11) comprenant au moins une soupape de surpression (28) et au moins un clapet antiretour (30),
dans lequel le circuit de commande hydraulique (11) peut être raccordé pour une réception de signal à au moins un élément hydraulique (4) pour absorber un déplacement d'un véhicule tractant la remorque (3),
dans lequel le circuit de commande hydraulique (11) peut en outre être raccordé à au moins un élément d'actionnement (12) hydraulique raccordé au circuit de commande hydraulique (11) et agissant sur une roue dirigeable (2),
dans lequel le circuit de commande hydraulique (11) peut en outre être raccordé à des moyens (20) pour diriger activement les roues dirigeables (2), lesquels moyens (20) de commande active comprennent une pompe (21),
dans lequel l'au moins une soupape de surpression (28) est agencée entre l'au moins un élément absorbant (4) et l'au moins un élément d'actionnement (12), et
dans lequel l'au moins un clapet antiretour (30) est agencé entre la pompe (21) des moyens (20) de commande active et l'au moins un élément d'actionnement (12),
dans lequel l'au moins une soupape de surpression (28) et l'au moins un clapet antiretour (30) sont intégrés dans une seule unité de soupape (27), et
dans lequel l'au moins un élément d'actionnement (12) agit dans deux directions et au moins deux unités de soupape (27) intégrées raccordées en croix sont incorporées dans le circuit de commande hydraulique (11),
**caractérisé en ce que** l'au moins un élément d'actionnement (12) a deux chambres (15, 16) et un conduit hydraulique (31) raccordant la pompe (21) des moyens (20) de commande active à l'une (15) des chambres a une branche qui est raccordée en tant que ligne de commande à l'unité de soupape (27) intégrée reçue dans un conduit (31) raccordant la pompe (21) à l'autre chambre (16).
